# EUROPÄISCHE PATENTSCHRIFT

(11) **EP 1 465 001 B1**
(45) Veröffentlichungstag und Bekanntmachung des Hinweises auf die Patenterteilung: **24.06.2015**
(21) Anmeldenummer: 04004498.4
(22) Anmeldetag: 27.02.2004
(51) Int. Cl.: G02B 21/24, G05G 1/02

(54) **Bedienknopf für ein optisches System**
Control knob for an optical system
Bouton de commande pour un système optique

(30) Priorität: 01.04.2003 DE 10314752
(43) Veröffentlichungstag der Anmeldung: 06.10.2004
(73) Patentinhaber: Leica Microsystems CMS GmbH, 35578 Wetzlar (DE); Fraunhofer-Gesellschaft zur Förderung der angewandten Forschung e.V., 80686 München (DE)
(72) Erfinder: Peter, Katja, Dr., 35578 Wetzlar (DE); Boehmel, Phillip, 01099 Dresden (DE); Knoll, Christian, 70191 Stuttgart (DE); Kempf, Dietmar, 71101 Schoenaich (DE)
(74) Vertreter: Hassenbürger, Anneliese

(56) Entgegenhaltungen:
- EP-A- 0 388 812
- DE-A- 10 126 291
- US-A- 6 064 519
- US-A1- 2002 159 147

## Beschreibung

Die vorliegende Erfindung betrifft einen Bedienknopf für ein optisches System. Im Besonderen betrifft die Erfindung einen Bedienknopf für ein optisches System aus einem ersten und einem zweiten koaxial angeordneten Drehelement, wobei das erste und das zweite Drehelement unabhängig voneinander drehbar sind. Das erste Drehelement liegt am optischen System an und das zweite Drehelement ist dem ersten Drehelement nachgeordnet. Das erste und das zweite Drehelement sind zumindest teilweise konisch ausgeformt und das erste Drehelement besitzt an der dem zweiten Drehelement gegenüberliegenden Seite einen größeren Durchmesser als das zweite Drehelement an dieser Stelle.

Fokusknöpfe sind in der Regel als koaxial angeordnete Drehstellteile ausgeführt und seitlich am Mikroskopstativ angebracht, wobei das größere den Grobfokus betätigt und das kleinere den Feinfokus.

Die U.S.-Patentanmeldung 2002/0159147 A1 offenbart einen Antriebsmechanismus für die Fokuseinstellung eines Mikroskops. Der Antriebsmechanismus umfasst einen Grobfokusknopf und einen Feinfokusknopf, wobei auf beiden Seiten des Mikroskops jeweils ein Grobfokusknopf und ein Feinfokusknopf angebracht sind. Der Grobfokusknopf ist direkt am Gehäuse des optischen Systems angebracht. Dem Grobfokusknopf folgt der Feinfokusknopf. Der Feinfokusknopf besitzt einen kleineren äußeren Durchmesser als der Grobfokusknopf. Der Grobfokusknopf kann konisch ausgebildet sein. Der Feinfokusknopf besitzt keine konische Ausbildung.

Marktübliche Fokustriebe haben oftmals den Nachteil, dass sie bedingt durch zu kleine Mantelflächen im Bereich des Grobfokustriebs kein sicheres Packen des Grobfokustriebs zulassen. Hinzu kommt, dass zu stark ausladende Feinfokustriebe die Finger stören, wenn der Grobfokus betätigt wird. Eine zu starke Konizität der beiden Drehstellteile des Fokusknopfes, führt zu einem axialen Abrutschen der betätigenden Finger. Ebenso wirkt sich eine zu starke Oberflächenprofilierung auf die Dauer nachteilig auf die taktile Feinfühligkeit der Finderkuppen aus und die Haftreibung zwischen Haut der Hand der Bedienperson und dem Stellteil wird unnötig herabsetzt, was die Einstellgenauigkeit reduziert dass in allen Fälle die Gefahr besteht, dass der Nutzer ungewollt den Grobfokus bedient, wenn er den Feinfokus bedient. Das liegt daran, dass beide Bauteile so zueinander angeordnet sind, dass der kleinere Fokustrieb als Zylinder den größeren Grobfokustrieb durchdringt und somit die Stirnfläche des Grobfokustriebs bei der Bedienung des Feinfokus berührt werden kann und so der Grobfokustrieb "mitgenommen" werden kann.

Das ist insbesondere bei Mikroskopen der Fall, bei denen der Übertragungsweg nicht mechanisch ist (in diesem Fall ist der Grobfokus so schwergängig, dass diese Gefahr kaum besteht), als vielmehr bei solchen, die eine motorische Ansteuerung aufweisen. Bei derartigen Geräten sind die Fokustriebe entsprechend leichtgängig, was den Fall einer ungewollten Betätigung möglich macht und was im ungünstigsten Fall zu einer Beschädigung oder Zerstörung der Probe und/oder des optischen Systems führen kann. Dieser Effekt der ungewollten Bedienung des Grobfokustriebs wird bei herkömmlichen Fokustrieben auch dadurch gefördert, dass das Stellteil des Feinfokustriebs nur unzureichend auf haptischem Weg darüber Aufschluss gibt, wie nahe sich die Finger des Nutzers bereits der Stirnfläche des Grobfokustriebs genähert haben.

Der Erfindung liegt daher die Aufgabe zugrunde, einen koaxialen Bedienknopf für ein optisches System zu schaffen, der eine ergonomische Bedienung erlaubt und dabei sicherstellt, dass eine unachtsame Fehlbedienung ausgeschlossen ist.

Die Aufgabe wird erfindungsgemäß mit einem gelöst, der die Merkmale des Anspruchs 1 umfasst.

Die Erfindung hat den Vorteil, dass der Bedienknopf aus einem ersten und einem zweiten Drehelement besteht, wobei das zweite Drehelement an der dem ersten Drehelement zugewandten Seite einen umlaufenden Ring ausgeformt hat. der in etwa den Durchmesser des ersten Drehelements besitzt. Das erste und das zweite Drehelement definieren jeweils eine Mantelfläche. Die Mantelflächen bieten bei beiden Drehelementen eine ausreichende Greiffläche. Die Geometrie ist so gewählt, dass auch für Nutzer mit kleinen Fingern das zweite Drehelement (Feinfokustrieb) nicht stört, wenn dar erste (Drehelement) Grobfokus bedient wird. Die Konizität der Drehelemente ist so gewählt, dass die Finger nicht abrutschen und dennoch eine angenehme Durchmesservarianz für Personen mit unterschiedlich großen Händen vorliegt. Das erste Drehelement (Grobfokus) kann nicht versehentlich mitgedreht werden, wenn das zweite Drehelement (Feinfokus) bedient wird. Der Nutzer bekommt eine klare taktile Rückmeldung, wenn er sich mit den Fingern dem Ende eines der beiden Drehelemente nähert.

Es ist von besonderem Vorteil, wenn der Bedienknopf an einem Mikroskop vorgesehen ist. Das erste und das zweite Drehelement sind in einer Ausführungsform jeweils an der Mantelfläche mit einer Profilierung in Form von Rillen, Kerben oder Rippen versehen. In einer anderen Ausführungsform besitzt das erste und das zweite Drehelement jeweils an einer Mantelfläche eine flächenbündig eingelegte Gummieinlage.

Weitere vorteilhafte Ausgestaltung der Erfindung können den Unteransprüchen entnommen werden.

Die Erfindung wird im Folgenden anhand der in den Figuren schematisch dargestellten Beispiele verdeutlicht. Dabei zeigen:
Fig. 1: eine Seitenansicht eines Bendienknopfes für ein optisches System gemäß dem Stand der Technik;
Fig. 2: eine perspektivische Ansicht eines Mikroskops, das einen am Stativ des Mikroskops angeordneten Bedienknopf zeigt;
Fig. 3: eine Seitenansicht einer ersten Ausführungsform des Bendienknopfes;
Fig. 4: eine Seitensicht der ersten Ausführungsform des Bendienknopfes, wobei Teile des ersten und der zweiten Drehelements weggebrochen sind, um das Zusammenwirken des ersten und des zweiten Drehelements zu verdeutlichen;
Fig. 5: eine Seitensicht einer zweiten Ausführungsform des Bendienknopfes, die mit Maßangaben für die einzelnen Elemente des Bedienknopfes versehen ist; und
Fig. 6: eine perspektivische Ansicht der zweiten Ausführungsform des Bedienknopfes.

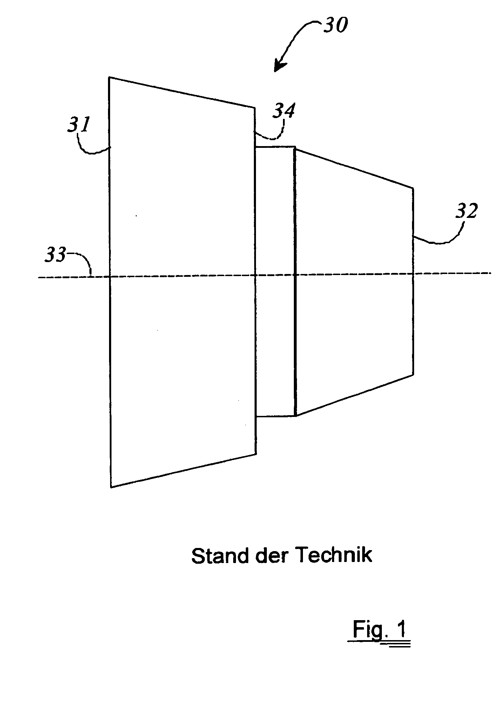

Fig. 1 ist ein Bedienknopf 30 gemäß dem Stand der Technik dargestellt, der aus einem ersten und einem zweiten Drehelement 31 und 32 besteht. Das erste und das zweite Drehelement 31 und 32 sind koaxial um einer Achse 33 angeordnet. Das erste Drehelement 31 besitzt einen größeren Durchmesser als das zweite Drehelement 32. Bei den gängigsten Ausführungsformen der koaxialen Anordnung der Drehelemente 31 und 32 ist das erste Drehelement 31 für den Grobfokustrieb und das zweite Drehelement 32 für den Feinfokustrieb zuständig. Das erste und das zweite Drehelement 31 und 32 sind im Wesentlichen konisch ausgebildet. Das erste Drehelement 31 weist eine Stirnseite 34 auf, die an das zweite Drehelement 32 heranreicht.

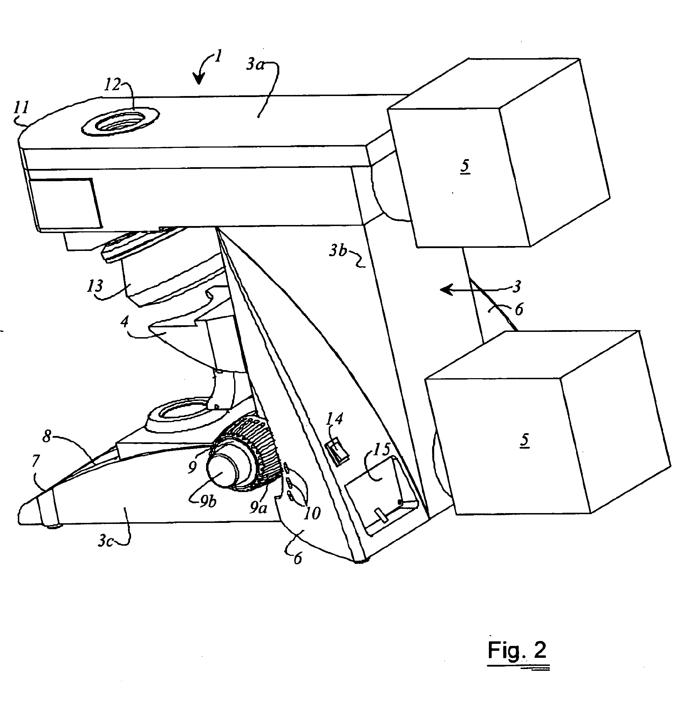

Fig. 2 zeigt ein Mikroskop 1, mit der Anordnung des Bedienknopfes am Stativ des Mikroskops. Das Stativ besteht aus einem Basisteil 3. Das Basisteil 3 ist in drei Hauptabschnitte unterteilt, die sich aus einem Querhauptabschnitt 3a, einem Stativsäulenabschnitt 3b und einem Stativfußabschnitt 3c zusammensetzen. Am Stativsäulenabschnitt 3b ist ein Mikroskoptischhalteelement 4 befestigt. Gegenüber dem Mikroskoptischhalteelement 4 ist am Stativsäulenabschnitt 4 mindesten eine Lichtquelle 5 vorgesehen. In dem hier dargestellten Ausführungsbeispiel sind zwei Lichtquellen 5 vorgesehen. Dabei ist eine der Lichtquellen 5 für die Durchlichtbeleuchtung und die andere Lichtquelle 5 ist für die Auflichtbeleuchtung zuständig. Der Querhauptabschnitt 3a, der Stativfußabschnitt 3b und der Stativsäulenabschnitt 3c sind derart ausgestaltet, dass sie im Wesentlichen die gleiche Breite besitzen. Am Stativ im Bereich des Stativsäulenabschnitt 3c ist jeweils beidseitig ein Stützelement 6 ausgebildet. Von besonderer Bedeutung ist, dass jedes der Stützelemente 6 im Bereich des Stativfußabschnitts 3c diesen in seiner Breite überragt.

Der Stativfußabschnitt 3c ist im Bereich gegenüber dem Stativsäulenabschnitt 3b konvex gekrümmt und besitzt im konvex gekrümmten Bereich 7 ein Display 8. Das Display 8 kann ebenso als ein Touchscreen ausgebildet sein, der es dem Benutzer erlaubt hierüber Parametereingaben zu machen bzw. bestimmte Messmethoden aufzurufen. Ist das Display 8 nicht als Touchscreen ausgestaltet, so werden über das Display 8 aktuelle Einstelldaten des Mikroskops 1 visuell dargestellt. Hinzu kommt, dass im Übergangsbereich zwischen dem Stativfußabschnitt 3c und dem Stützelement 6 zumindest auf einer Seite jeweils ein Bedienknopf 30 vorgesehen ist, der z.B. die Mikroskoptischhalteelement 4 in seiner Höhe verstellt. Der Bedienknopf 30 besteht (wie bereits aus dem Stand der Technik bekannt) aus dem ersten und dem zweiten, koaxial angeordneten Drehelement 31 und 32. Das zweite Drehelement 32 ist für die Feinverstellung des Mikroskoptisches bzw. des Mikroskoptischhalteelements 4 zuständig. Das erste Drehelement 31 ist für die Grobverstellung zuständig. Es hat sich als besonders vorteilhaft erwiesen, dem zweiten Drehelement 32 die Feinverstellung und dem ersten Drehelement 31 die Grobverstellung zuzuweisen. Ebenso ist es denkbar auf den Bedienknopf 30 zusätzlich andere Funktionen zu legen. Im Bereich um den Bedienknopf 30 sind mehrere Betätigungselemente 10 vorgesehen, über die ebenfalls Mikroskopfunktionen schaltbar sind. Die Betätigungselemente 10 sind als Druckknöpfe ausgebildet. Die Mikroskopfunktionen sind z.B. die Filterwechsel, Blendenwahl, Revolverbewegung usw. Am Stirnteil 11 des Querhauptabschnitts 3a ist ein Okularflansch 12 ausgebildet, der eine optische Verbindung mit einem Revolver 13 herstellt, an dem mindestens ein Objektiv (nicht dargestellt) angebracht werden kann. An einem Stützelement 6 sind ein Netzschalter 14 und ein Anschlusselement 15 vorgesehen. Über das Anschlusselement 15 kann das Mikroskop 1 mit mehreren externen Bedienelement verbunden werden. Ebenso besteht am Anschlusselement 15 die Möglichkeit des Anschlusses von Datenleitungen (nicht dargestellt).

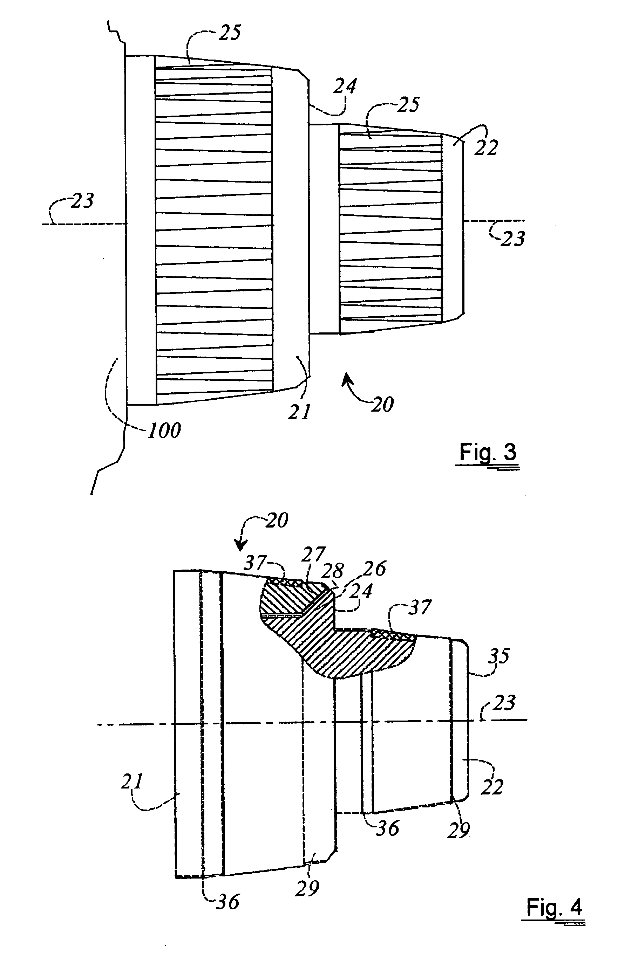

Fig. 3 zeigt eine Seitenansicht einer ersten Ausführungsform eines erfindungsgemäßen Bedienknopfes 20. In der Regel wird der Bedienknopf 20 zur Grob- und Feinverstellung eines optischen Systems 100 verwendet. Das optische System 100 kann z.B. ein Standardmikroskop 1 sein. Dabei ist der erfindungsgemäße Bedienknopfes 20 das auffälligste Stellteil. In Fig.3 ist das optische System 100 zum Teil dargestellt, um die Anordnung des Bedienknopfes 20 am optischen System 100 zu verdeutlichen. Der Bedienknopf 20 besteht aus einem ersten und einem zweiten Drehelement 21 und 22, die koaxial um eine gemeinsame Achse 23 angeordnet sind. Das erste und das zweite Drehelement 21 und 22 sind unabhängig voneinander um die Achse 23 drehbar. Das erste Drehelement 21 liegt am optischen System 1 an. Dem ersten Drehelement 21 ist das zweite Drehelement 22 nachgeordnet. Das erste und das zweite Drehelement 21 und 22 sind zumindest teilweise konisch ausgeformt und das erste Drehelement 21 ist derart ausgestaltet, dass es an der dem zweiten Drehelement 22 gegenüberliegenden Seite einem größeren Durchmesser aufweist als das zweite Drehelement 22 an dieser Stelle. Hinzu kommt, dass das zweite Drehelement 22 an der dem ersten Drehelement 22 zugewandten Seite einen umlaufenden Ring 24 ausgeformt hat, der in etwa den Durchmesser des ersten Drehelements 21 besitzt. Zur Erhöhung der Griffsicherheit der Finger bzw. Hände Benutzers des optischen Systems 1 ist, in dieser Ausführungsform das erste und das zweite Drehelement 21 und 22 jeweils an der Oberfläche mit einer Profilierung oder Riffelung 25 versehen. Die Profilierung oder Riffelung 25 kann in Form von Rillen, Kerben oder Rippen ausgebildet sein. Das Material des ersten und zweiten Drehelements 21 und 22 ist in dieser Ausführungsform ein spritzgegossener Kunststoff. Ist der Bedienknopf 20 aus Kunststoff herstellt, so besteht das Problem des Kälteempfindens nicht und die Herstellkosten sind niedrig. Eine zusätzliche Massenträgheit lässt sich in diesem Fall mit eingebetteten Messingschwungmassen bewirken.

Fig. 4 zeigt eine Seitensicht des Bendienknopfes 20, wobei Teile des ersten und der zweiten Drehelements 21 und 22 weggebrochen sind, um das Zusammenwirken des ersten und des zweiten Drehelements21 und 22 zu verdeutlichen. Wie bereits in Fig. 3 beschrieben ist das zweite Drehelement 22 mit einem Ring versehen 24, der in etwa dem Durchmesser des ersten Drehelements 21 besitzt. Das erste Drehelement 21 besitzt eine zur Achse 23 hin verlaufende konische Form 27. Ebenso ist der Rand 24 des zweiten Drehelements 22 mit einem konischen Fortsatz 26, so dass der konische Fortsatz 26. Die konische Form 27 und der konische Fortsatz 26 des zweiten Drehelements 22 wirken derart zusammen, dass sich zwischen dem ersten Drehelement 21 und dem zweiten Drehelement 22 eine Trennfuge 28 ausbildet. Durch die Trennfuge 28 ist zum einen die freie Drehfähigkeit des ersten Drehelements 21 gegenüber dem zweiten Drehelement 22 gegeben und zum anderen stellt die Lage der Trennfuge 28 sicher, dass bei der Betätigung des zweiten Drehelements 22 keine ungewollte Betätigung des ersten Drehelements 21 erfolgt. Die Trennfuge 28 ist durch den Rand 24 im Bereich des Durchmessers des ersten Drehelements 21 gebildet. Das erste und das zweite Drehelement 21 und 22 weisen jeweils eine Mantelfläche 29 auf, die so dimensioniert ist, dass auch für Nutzer von großen Händen genug Kontaktfläche zur Verfügung steht. Gleichzeitig ist durch die Größenabstufung zwischen den ersten Drehelement 21 (für den Grobtrieb) und dem zweiten Drehelement 22 (für den Feintrieb) eine klare Unterscheidbarkeit zwischen beiden Stellteilen und deren Funktionen erkennbar. Außerdem hilft diese starke Abstufung, dass Nutzer mit kurzen Fingern bei der Betätigung des ersten Drehelements 21 (Grobfokustriebs), also beim Übergreifen über das zweite Drehelement 22 nicht mit der Fingerinnenseiten und an der Stirnseite 35 des zweiten Drehelements 22 hängen bleiben. Dennoch ist der Durchmesser des zweiten Drehelements 22 so groß gewählt, dass ein exaktes Einstellen möglich ist. Die Mantelfläche 29 weist in dieser Ausführungsform keine Profilierung in Form von Rillen, Kerben oder Rippen auf. Die taktile Rückmeldung über das Ende des ersten oder zweiten Drehelements 21 oder 22 erfolgt mittels eines geometrischen Überganges von einem Konus zu einem Zylinder, was eine deutlich fühlbare umlaufende Kante 36 zur Folge hat. Diese Kante 36 signalisiert "Ende des Bedienelements". Das erste und das zweite Drehelement 21 und 22 sind in einer zweiten Ausführungsform aus feingedrehtem Edelstahl gefertigt. Dessen hohe Massenträgheit wirkt sich positiv auf die Einstellgenauigkeit aus. Eine Gummieinlage 37 im ersten und im zweiten Drehelement 21 und 22 verhindert eine zu große Wärmeabfuhr aus den Fingerspitzen und gewährleistet rutschsicheren Zugriff.

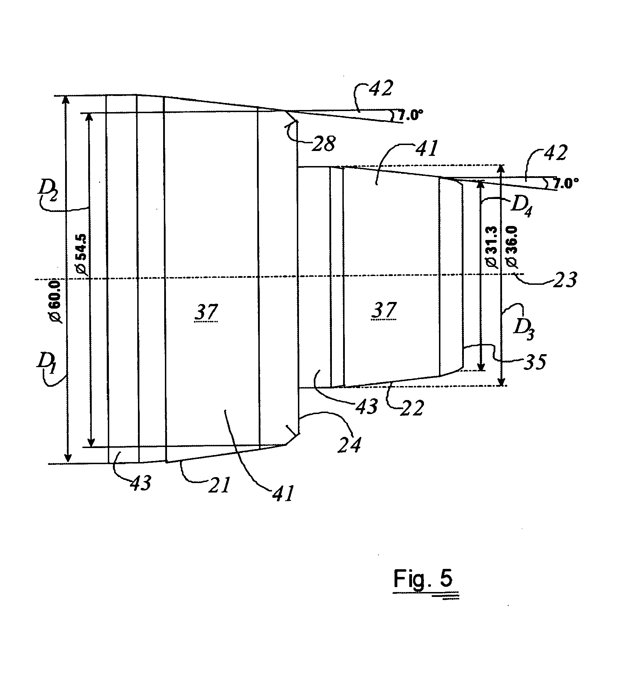

Fig. 5 zeigt eine Seitensicht einer zweiten Ausführungsform des Bendienknopfes 20, die mit Maßangaben für die einzelnen Elemente des Bedienknopfes versehen ist. Der Bendienknopf 20 besteht aus dem ersten und dem zweiten Drehelement 21 und 22, die beide zum Teil einen konischen Körper 41 besitzen. Der konische Körper 41 ist jeweils mit einem zylindrischen Absatz 43 mit einer Breite von 9mm versehen, der zum einen das Aufbringen einer Skala ermöglicht und zusätzlich eine Rückmeldung über das Ende des Drehelements 21 und 22 liefert. Jeder konische Körper 41 besitzt einen Konuswinkel 42 von 7°. Dieser wird zusammen mit der flächenbündig eingelegten Gummieinlage 37 als angenehm empfunden und hat sich gegenüber größeren Winkeln als abrutschsicherer herausgestellt. Um eine Betätigung des jeweils anderen Drehelements 21 oder 22 während des Positioniervorganges auszuschließen, wird die Trennfuge 28 oberhalb dem Rand 24 zwischen beiden Stellteilen positioniert. Das erste Drehelement 21 besitzt am optischen System einen Maximaldurchmesser D₁ von 60mm. Das erste Drehelement 21 besitzt im Bereich der Trennfuge einen Durchmesser D₂ von 54.5 mm. Das zweite Drehelement 22 besitzt am ersten Drehelement 21 einen Maximaldurchmesser D₃ von 36mm. Ferner besitzt das zweite Drehelement 22 im Bereich der Stirnseite 35 des zweiten Drehelements 22 einen Durchmesser D₄ von 31.3 mm.

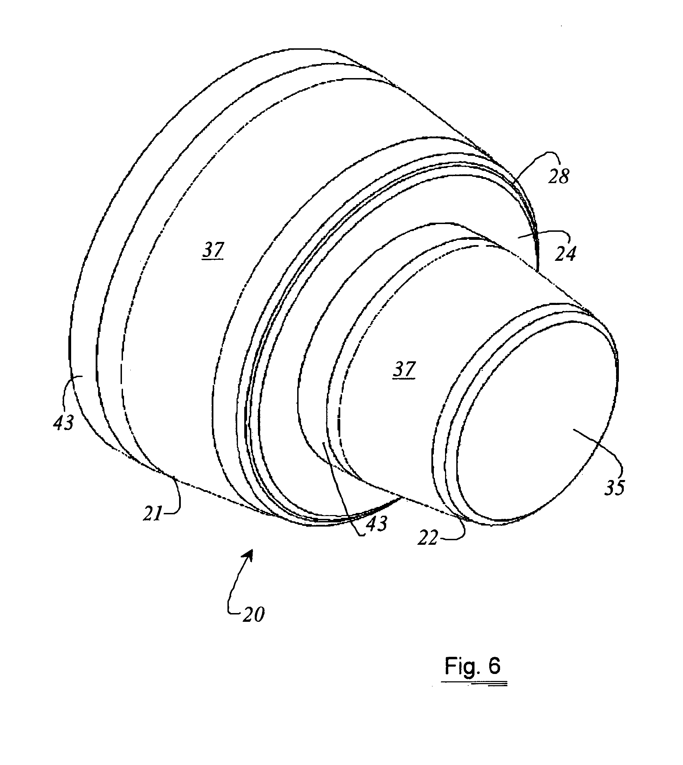

Fig. 6 zeigt eine perspektivische Ansicht der zweiten Ausführungsform des Bedienknopfes 20. Das zweite Drehelement 22 mit einem Ring versehen 24, der in etwa dem Durchmesser des ersten Drehelements 21 besitzt. Von der Stirnseite 35 des zweiten Drehelements 22 aushegend, besitzt das zweite Drehelement 22 einen konischen Körper 41, der in einem zylindrischen Absatz 43 endet. An dem zylindrischen Absatz 43 schließt sich der umlaufende Ring 24 an. Zwischen dem ersten Drehelement 21 und dem umlaufenden Ring 24 ist eine Trennfuge 28 ausgebildet. Das erste Drehelement 21 ist ebenfalls mit einem konischen Körper 41 versehen, der eben falls in einem zylindrischen Absatz 43 endet. Ein Teil des konischen Körpers 41 ist mit einer Gummieinlage 37 oder mit einer Profilierung versehen.

Die Erfindung wurde in Bezug auf eine besondere Ausführungsform beschrieben. Es ist einem Fachmann jedoch klar, das Abwandlungen und Modifikationen durchgeführt werden können, ohne den Schutzbereich der Ansprüche zu verlassen.

## Patentansprüche

1. Bedienknopf (20) für ein optisches System (100) aus einem ersten und einem zweiten koaxial angeordneten Drehelement (21, 22), dass das erste und das zweite Drehelement (21, 22) unabhängig voneinander drehbar sind, dass das erste Drehelement (21) am optischen System (100) anliegt, dass dem ersten Drehelement (21) das zweite Drehelement (22) nachgeordnet ist, dass das erste und das zweite Drehelement (21, 22) zumindest teilweise konisch ausgeformt sind und dass das erste Drehelement (21) an der dem zweiten Drehelement (22) gegenüberliegenden Seite einen größeren Durchmesser aufweist, als das zweite Drehelement (22) an dieser Stelle, dass das zweite Drehelement (22) an der dem ersten Drehelement (21) zugewandte Seite einen umlaufenden Ring (24) ausgeformt hat, der in etwa den Durchmesser des ersten Drehelements (21) besitzt, **dadurch gekennzeichnet, dass** das erste Drehelement (21) am optischen System (100) einen maximalen Durchmesser (D₁) von 57,0 bis 63,0 mm und im Bereich des zweiten Drehelements (22) einen Durchmesser (D₂) von 51,5 bis 56,5 mm aufweist, dass das zweite Drehelement (22) am ersten Drehelement (21) einen Maximaldurchmesser (D₃) von 34,0 bis 38,0 mm und im Bereich einer Stirnseite (35) des zweiten Drehelements (22) einen Durchmesser (D₄) von 29,3 bis 33,3 mm aufweist.

2. Bedienknopf (20) nach Anspruch 1, **dadurch gekennzeichnet, dass** das erste Drehelement (21) am optischen System (100) einen Maximaldurchmesser (D₁) von 60 mm und im Bereich des zweiten Drehelements (22) einen Durchmesser (D₂) von 54,5 mm besitzt, dass das zweite Drehelement (22) am ersten Drehelement (21) einen Maximaldurchmesser (D₃) von 36 mm und im Bereich der Stirnseite (35) des zweiten Drehelements (22) einen Durchmesser (D₄) von 31,3 mm besitzt.

3. Bedienknopf (20) nach Anspruch 1, **dadurch gekennzeichnet, dass** das erste und das zweite Drehelement (21, 22) jeweils an einer Mantelfläche (29) eine Profilierung (25) in Form von Rillen, Kerben oder Rippen aufweist.

4. Bedienknopf (20) nach Anspruch 1, **dadurch gekennzeichnet, dass** das erste und das zweite Drehelement (21, 22) jeweils an einer Mantelfläche (29) eine flächenbündige eingelegte Gummieinlage (37) besitzt.

5. Bedienknopf (20) nach Anspruch 1, **dadurch gekennzeichnet, dass** das erste Drehelement und das zweite Drehelement (21, 22) jeweils konisch ausgebildet sind und wobei jeder der konischen Körper (41) am breiteren Teil mit einem zylindrischen Absatz versehen ist.

6. Bedienknopf nach Anspruch 5, **dadurch gekennzeichnet, dass** jeder der konischen Körper (41) des ersten und des zweiten Drehelements (21, 22) einen Winkel von 5 ° bis 10 ° bzgl. der Drehachse des Bedienknopfs (20) aufweist.

7. Bedienknopf (20) nach Anspruch 6, **dadurch gekennzeichnet, dass** der Winkel 7 ° beträgt.

8. Bedienknopf (20) nach Anspruch 6, **dadurch gekennzeichnet, dass** sich an den konischen Körper (41) jeweils am größeren Durchmesser des konischen Körpers (41) ein zylindrischer Absatz (43) anschließt.

9. Bedienknopf (20) nach Anspruch 8, **dadurch gekennzeichnet, dass** der zylindrische Absatz (43) eine Breite von 9 mm aufweist.

10. Bedienknopf (20) nach einem der Ansprüche 1 bis 9, **dadurch gekennzeichnet, dass** zwischen dem ersten und dem zweiten Drehelement (21, 22) durch einen Rand (24) des zweiten Drehelements (22) eine Trennfuge (28) ausgebildet ist.

11. Bedienknopf (20) nach Anspruch 10, **dadurch gekennzeichnet, dass** das erste Drehelement (21) eine zur Achse (23) hin verlaufende konische Form (27) besitzt, dass der Rand (24) des zweiten Drehelements (22) mit einem konischen Fortsatz (26) versehen ist und das die konische Form (27) und der konische Fortsatz (26) derart zusammenwirken, dass zwischen dem ersten Drehelement (21) und dem zweiten Drehelement (22) die Trennfuge (28) ausgebildet ist.

12. Bedienknopf (20) nach einem der Ansprüche 1 bis 11, **dadurch gekennzeichnet, dass** das optische System (100) ein Mikroskop ist.

## Claims

1. Control knob (20) for an optical system (100), composed of a first and a second coaxially arranged rotary element (21, 22), wherein the first and the second rotary element (21, 22) are rotatable independently of one another, wherein the first rotary element (21) bears against the optical system (100), wherein the second rotary element (22) is subordinate to the first rotary element (21), wherein the first and the second rotary element (21, 22) are formed at least partially in a conical manner, and wherein the first rotary element (21) has a larger diameter on the side next to the second rotary element (22) than the second rotary element (22) has at this point, wherein the second rotary element (22) has a circumferential ring (24) formed on the side facing the first rotary element (21), said ring (24) having approximately the same diameter as the first rotary element (21), **characterized in that** the first rotary element (21) has a maximum diameter (D₁) of 57.0 to 63.0 mm at the optical system (100) and a diameter (D₂) of 51.5 to 56.5 mm in the region of the second rotary element (22), and **in that** the second rotary element (22) has a maximum diameter (D₃) of 34.0 to 38.0 mm at the first rotary element (21) and a diameter (D₄) of 29.3 to 33.3 mm in the region of an end side (35) of the second rotary element (22).

2. Control knob (20) according to Claim 1, **characterized in that** the first rotary element (21) has a maximum diameter (D₁) of 60 mm at the optical system (100) and a diameter (D₂) of 54.5 mm in the region of the second rotary element (22), and **in that** the second rotary element (22) has a maximum diameter (D₃) of 36 mm at the first rotary element (21) and a diameter (D₄) of 31.3 mm in the region of the end side (35) of the second rotary element (22).

3. Control knob (20) according to Claim 1, **characterized in that** the first and the second rotary element (21, 22) each have profiling (25) in the form of flutes, scores or ribs on a lateral face (29) thereof.

4. Control knob (20) according to Claim 1, **characterized in that** the first and the second rotary element (21, 22) each have a rubber insert (37) inserted in a flush manner on a lateral face (29) thereof.

5. Control knob (20) according to Claim 1, **characterized in that** the first rotary element and the second rotary element (21, 22) are each formed in a conical manner and wherein each of the conical bodies (41) is provided with a cylindrical shoulder at the wider part thereof.

6. Control knob according to Claim 5, **characterized in that** each of the conical bodies (41) of the first and the second rotary element (21, 22) is at an angle of 5 ° to 10 ° with regard to the rotation axis of the control knob (20).

7. Control knob (20) according to Claim 6, **characterized in that** the angle is 7°.

8. Control knob (20) according to Claim 6, **characterized in that** a cylindrical shoulder (43) adjoins the conical body (41) in each case at the larger diameter of the conical body (41).

9. Control knob (20) according to Claim 8, **characterized in that** the cylindrical shoulder (43) has a width of 9 mm.

10. Control knob (20) according to one of Claims 1 to 9, **characterized in that** a parting line (28) is formed between the first and the second rotary element (21, 22) through a rim (24) of the second rotary element (22).

11. Control knob (20) according to Claim 10, **characterized in that** the first rotary element (21) has a conical formation (27) extending towards the axis (23), **in that** the rim (24) of the second rotary element (22) is provided with a conical extension (26), and **in that** the conical formation (27) and the conical extension (26) interact such that the parting line (28) is formed between the first rotary element (21) and the second rotary element (22).

12. Control knob (20) according to one of Claims 1 to 11, **characterized in that** the optical system (100) is a microscope.

## Revendications

1. Bouton de commande (20) pour un système optique (100) constitué d'un premier et d'un deuxième élément tournant disposés coaxialement (21, 22), le premier et le deuxième élément tournant (21, 22) pouvant tourner indépendamment l'un de l'autre, le premier élément tournant (21) s'appliquant contre le système optique (100), le deuxième élément tournant (22) étant disposé après le premier élément tournant (21), le premier et le deuxième élément tournant (21, 22) étant formés de manière au moins partiellement conique et le premier élément tournant (21) présentant au niveau du côté opposé au deuxième élément tournant (22) un plus grand diamètre que le deuxième élément tournant (22) à cet endroit, le deuxième élément tournant (22) ayant une bague périphérique (24) formée au niveau du côté tourné vers le premier élément tournant (21) qui possède approximativement le diamètre du premier élément tournant (21), **caractérisé en ce que** le premier élément tournant (21) présente au niveau du système optique (100) un diamètre maximal (D₁) de 57,0 à 63,0 mm et, dans la région du deuxième élément tournant (22), un diamètre (D₂) de 51,5 à 56,5 mm, **en ce que** le deuxième élément tournant (22) présente au niveau du premier élément tournant (21) un diamètre maximal (D₃) de 34,0 à 38,0 mm et dans la région d'un côté frontal (35) du deuxième élément tournant (22) un diamètre (D₄) de 29,3 à 33,3 mm.

2. Bouton de commande (20) selon la revendication 1, **caractérisé en ce que** le premier élément tournant (21) possède au niveau du système optique (100) un diamètre maximal (D₁) de 60 mm et dans la région du deuxième élément tournant (22) un diamètre (D₂) de 54,5 mm, **en ce que** le deuxième élément tournant (22) présente au niveau du premier élément tournant (21) un diamètre maximal (D₃) de 36 mm et dans la région du côté frontal (35) du deuxième élément tournant (22) un diamètre (D₄) de 31,3 mm.

3. Bouton de commande (20) selon la revendication 1, **caractérisé en ce que** le premier et le deuxième élément tournant (21, 22) présentent chacun au niveau d'une surface d'enveloppe (29) un profilage (25) en forme de rainures, d'encoches ou de nervures.

4. Bouton de commande (20) selon la revendication 1, **caractérisé en ce que** le premier et le deuxième élément tournant (21, 22) possèdent chacun au niveau d'une surface d'enveloppe (29) un insert en caoutchouc (37) inséré en affleurement avec la surface.

5. Bouton de commande (20) selon la revendication 1, **caractérisé en ce que** le premier élément tournant et le deuxième élément tournant (21, 22) sont chacun réalisés sous forme conique et dans lequel chacun des corps coniques (41) est muni, au niveau de la partie plus large, d'un épaulement cylindrique.

6. Bouton de commande selon la revendication 5, **caractérisé en ce que** chacun des corps coniques (41) du premier et du deuxième élément rotatif (21, 22) présente un angle de 5° à 10° par rapport à l'axe de rotation du bouton de commande (20).

7. Bouton de commande (20) selon la revendication 6, **caractérisé en ce que** l'angle vaut 7°.

8. Bouton de commande (20) selon la revendication 6, **caractérisé en ce qu'**un épaulement cylindrique (43) se raccorde à chaque fois au corps conique (41) au niveau du plus grand diamètre du corps conique (41).

9. Bouton de commande (20) selon la revendication 8, **caractérisé en ce que** l'épaulement cylindrique (43) présente une largeur de 9 mm.

10. Bouton de commande (20) selon l'une quelconque des revendications 1 à 9, **caractérisé en ce qu'**entre le premier et le deuxième élément tournant (21, 22) est réalisé un joint de séparation (28) par un bord (24) du deuxième élément tournant (22).

11. Bouton de commande (20) selon la revendication 10, **caractérisé en ce que** le premier élément tournant (21) possède une forme conique (27) s'étendant vers l'axe (23), **en ce que** le bord (24) du deuxième élément tournant (22) est pourvu d'une saillie conique (26) et **en ce que** la forme conique (27) et la saillie conique (26) coopèrent l'une avec l'autre de telle sorte qu'entre le premier élément tournant (21) et le deuxième élément tournant (22) soit réalisé le joint de séparation (28).

12. Bouton de commande (20) selon l'une quelconque des revendications 1 à 11, **caractérisé en ce que** le système optique (100) est un microscope.
